# EUROPEAN PATENT APPLICATION

(11) **EP 4 431 728 A1**
(43) Date of publication of application: **18.09.2024**
(21) Application number: 23382246.9
(22) Date of filing: 16.03.2023
(51) Int. Cl.: F03D 13/20, F03D 80/00, F03D 80/60

(54) **NACELLE COMPRISING A BOTTOM UNIT**

(71) Applicant: Siemens Gamesa Renewable Energy Innovation & Technology S.L., 31621 Sarriguren (Navarra) (ES)
(72) Inventor: Crespo Sanz, Carlos, 31151 Obanos (ES); Azcona Pérez, Ignacio, 31263 Dicastillo (ES); Roman Barriopedro, Daniel, 28010 Madrid (ES)
(74) Representative: SGRE-Association

(57) **Abstract**

The present invention relates to a nacelle (1) for housing a drive train (3), a transformer (8) and a first converter (9) of a wind turbine (1). The nacelle (2) comprises a main unit (30) configured to be connected to a tower (17) by means of a yawing arrangement (11) and housing the drive train (3) and a first bottom unit (31) mounted below a bottom surface of the main unit (30) and housing the first converter (9). The main unit (30) and the first bottom unit (31) are separate units fixed together by attaching means (22), wherein the main unit (30) and the first bottom unit (31) extend in a direction substantially parallel to a rotational axis of the drive train (3).

## Description

The present invention relates to a nacelle for a wind turbine. The present invention further relates to a wind turbine comprising said nacelle. The present invention further relates to a method of assembling a wind turbine comprising said nacelle.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

The current development of the technology of wind turbines tends to an increased size of wind turbines for harvesting more wind energy, with longer blades and higher towers. Due to the increasing size of wind turbines and the higher loads generated by the wind turbines, the size of the nacelle has also increased in order to ensure that the nacelle is capable of accommodating the required wind turbine components, in particular bigger drive trains and heavier components have to be supported in the nacelle.

As the size of the wind turbines, and thereby the size of the individual parts of the wind turbines, increases it becomes increasingly difficult to transport the parts to the operating site, and the dimensions of roads, transport vehicles etc. impose an upper limit to the size of parts which it is possible to transport.

The modularity concept, in which larger parts of the wind turbine are divided into smaller modules, has gained popularity in the last years. Wind turbines are normally transported from the location or locations of manufacture of the individual parts to the operating site where the wind turbine is supposed to be erected. The concept of a modular nacelle reduces the costs of installation and transportation, as it is easier to move and hoist smaller units and this becomes very relevant due to the increased size of wind turbines in the last years. In addition, the modularity of the nacelle allows to use some of the units for several wind turbine models, which reduces the costs of manufacture and planning.

EP 2 063 119 A1 discloses a module of a nacelle of a wind turbine, which is separately designed, manageable and comprises a housing part. The module is connectable to at least one further module of the nacelle, which is also separately designed, manageable and has a housing part. The housing part of the module builds in the assembled status of the nacelle, which comprises several modules, a part of the housing of the nacelle. The modules are arranged one behind the other along a direction defined by the rotational axis of the rotor of the wind turbine. This has the consequence that some of the modules are arranged with a relatively long distance to the tower which carries the nacelle. Thereby the loads, in particular in the form of torque, introduced by these modules become relatively high, and the requirements to the strength of the construction of the nacelle as well as of the tower are increased.

EP 2 550 453 A2 discloses a nacelle formed by a main unit and two side units coupled each on one side of the main unit. The side units are connected to the main unit with doors for allowing the passage of personnel between the units. The side units are configured to accommodate wind turbine components.

An economic alternative to designing a housing for the modules is the use of shipping freight containers. The use of shipping freight containers to house components at the nacelle is known from DK 2021 70681 A1, WO 2021164831 A1, WO 2022247999 A1 and WO 2022248001 A1. This document discloses the use of shipping freight containers for the main unit forming the main room of the nacelle and for auxiliary units attached at the sides of the nacelle. The document discloses the advantages of shipping freight containers with respect to handling, transportation, and storage. Shipping freight containers can for example be handled anywhere in the world by ship, train, and truck etc. and at lower costs compared to bulk transport. Nonetheless, one disadvantage of coupling the containers at the side of the main unit or, in general, at the lateral sides of the nacelle is that the containers cannot withstand high loading without deforming, as they are only coupled on their lateral side to the main unit. A high loading of the container would result in a deformation of the container's shape, from a rectangular cross-section to a trapezoid cross-section. The lateral wall of the container coupled to the lateral wall of the nacelle would stay in place and the weight of the components housed inside the container would pull down the rest of the container, thereby deforming the shape of the container. Hence, containers coupled at the sides of the nacelle are not suitable for carrying heavy loads.

The attachment of modules at the rear part of the nacelle is known from US 2018335023 A1. For similar reasons as the ones mentioned for containers attached at the lateral sides of the nacelle, such modules are not suitable for carrying heavy loads.

Containerized modules on top of the nacelle are also known from WO 2022171256 A1. These modules can however do not carry heavy components because the roof of the housing of the nacelle is usually not suited to support heavy loads, as the main supporting structure, such as the bedframe and supporting beams, are arranged at the bottom of the nacelle.

Hanging components of the nacelle are known from US 2012146335 A1. In this disclosure, a transformer is attached to the support structure of the nacelle and hangs below the nacelle downwind of the tower. However, the transporter remains unprotected from weather conditions as it is not housed in a proper manner.

It is thus an object for the invention to provide a nacelle comprising units that overcomes the problems known in the prior art.

This is achieved by a nacelle for a wind turbine according to claim 1, a wind turbine according to claim 14 and a method of assembling a wind turbine according to claim 15.

According to the invention, a nacelle for housing a drive train, a transformer and a first converter of a wind turbine, the nacelle comprises a main unit and a first bottom unit.

The main unit is configured to be connected to a tower by means of a yawing arrangement and houses the drive train. Once installed on the tower, the yawing arrangement allows the nacelle to rotate about a substantially vertical yawing axis in order to allow the blades of the wind turbine to be directed into the wind.

The drive train comprises a main bearing and a generator and can further comprise a gearbox. Once installed on the tower, the drive train is at least partly supported by the tower, as its weight is transferred to the tower by means of the yawing arrangement. The main unit might be configured to support the drive train during transportation and prior to mounting of the nacelle. The gearbox and generator are attached to the main bearing such that the weight of these components and preferably also the loads during wind turbine operation are transferred to the main bearing.

The nacelle defines a housing or enclosure accommodating various wind turbine components, such as a generator, one or more converters, a drive train, e.g. including a gear arrangement, various electrical components, cooling equipment, hydraulic components, lifting equipment, etc.

It is an advantage that one or more of the wind turbine components is/are accommodated in the bottom units, since it allows the common interior space defined by the units to be used to the greatest possible extent. Furthermore, it allows wind turbine components to be hoisted to the nacelle along with the bottom units during erection of the wind turbine, or in the case that one or more wind turbine components need to be replaced. Thereby the total weight which needs to be lifted to the top of the tower during erection of the wind turbine is divided into smaller portions, and the requirements on the lifting equipment can be lowered. This reduces the costs involved with erection of, decommissioning of and/or service on the wind turbine, since cheaper lifting equipment can be used.

The first bottom unit is mounted below a bottom surface of the main unit and houses the first converter. The main unit and the first bottom unit are separate units fixed together by attaching means. The main unit and the first bottom unit extend in a direction substantially parallel to a rotational axis of the drive train. This provides for an advantageous modularity of the nacelle with the advantageous distribution of the main wind turbine components such as to have the drive train in the main unit and the first converter in the first bottom unit.

This configuration minimizes assembly labors per unit at the factory, allowing a higher production rate to face the increasing demand for wind turbines. The preassembly can also be done with smaller manufacturing machines, thus not requiring as much space as single unit integral nacelles.

The use of multiple units forming the nacelle instead of a single unit allows for standard interfaces for multiple wind turbine models and standard tooling, which further minimizes the costs compared to single unit integral nacelles.

As already mentioned, the transportation and hoisting of the modules is easier and cheaper compared to single unit integral nacelles. Thus, the logistics are greatly simplified and the manufacturing and installing process is faster.

According to a preferred embodiment of the invention, the nacelle further comprises a second bottom unit mounted below the bottom surface of the main unit and extending in a direction substantially parallel to the rotational axis of the drive train, wherein the second bottom unit houses a second converter. By having the second converter below the main unit, the second converter can be arranged closer to the tower, thereby moving the center of gravity of the nacelle in the direction of the tower and increasing the stability of the nacelle.

According to another preferred embodiment of the invention, the nacelle further comprises a third bottom unit mounted below the bottom surface of the main unit, wherein the third bottom unit houses the transformer. By having the transformer below the main unit, the transformer can be arranged closer to the tower, thereby moving the center of gravity of the nacelle in the direction of the tower and increasing the stability of the nacelle.

According to another preferred embodiment of the invention, the third bottom unit extends in a direction substantially parallel to the rotational axis of the drive train and is arranged side by side between the first bottom unit and the second bottom unit. Arranging bottom units side by side eases the installation of the bottom units below the main unit, as the units can be hoisted and coupled together at the installation site.

According to another preferred embodiment of the invention, the first and second bottom units are arranged side by side in a direction substantially parallel to the rotational axis of the drive train, wherein the third bottom unit extends in a direction substantially perpendicular to the rotational axis of the drive train and is arranged between the first and second bottom units and the yawing arrangement. This is particularly advantageous depending on the width of the bottom surface of the main unit, as an optimal arrangement for bigger-sized nacelles of the containers could result in this configuration.

In addition, this configuration advantageously allows to arrange heavier wind turbine components, such as the transformer which usually weighs several tons, closer to the tower, thereby moving the center of gravity of the rear part of the nacelle towards the tower and improving the load distribution within the nacelle, thereby increasing the stability of the nacelle structure.

In addition, this configuration advantageously allows to have shorter connections between the transformer and the first and second converters, in particular shorter busbar connections. Due to the increasing costs of materials, a shorter connection between components greatly reduces the costs of electrical components within the nacelle.

According to another preferred embodiment of the invention, the main unit and at least one bottom unit comprise openings for direct access between the units. Hence, the units are coupled in such a way that direct access is allowed between the main unit and at least one bottom unit. Accordingly, when the bottom unit or the plurality of bottom units is mounted below the main unit, personnel is allowed to move around in an interior nacelle space which is larger than the interior space defined by the main unit, as well as larger than the interior space defined by each of the bottom units, since the personnel is allowed to gain access to the interior of the main unit as well as to the interior of the bottom units. This makes it easy to accommodate the various wind turbine components in the nacelle in a manner which allows personnel to gain access to the components or move around the components, even if the components have considerable sizes. Furthermore, a nacelle defining an interior space of a sufficient size is provided, and it is possible to transport the nacelle to the operating site by means of traditional transport means, because the main unit and the bottom units can be transported independently of each other.

Direct access between the main unit and the bottom units may, e.g., be obtained by mounting at least one side of the main unit in such a manner that a common interior space is defined by the main unit and the bottom units. According to this embodiment, one large interior space is defined in the nacelle. The common interior space of the nacelle may advantageously be formed by leaving a region at the bottom of the main unit and the top of the bottom unit which face each other completely open or almost completely open, thereby allowing substantially free passage between the main unit and the bottom units.

It should be noted that even though, according to this embodiment, a common interior space is defined by the main unit and the bottom units of the nacelle of the present invention, it is not ruled out that one or more of the wind turbine components which are accommodated in the nacelle is/are enclosed in or covered by separate rooms, units, racks etc. For instance, it may be desirable to enclose a transformer in this manner, e.g. for safety reasons.

As an alternative, direct access between the main unit and the bottom units may be obtained by providing door openings in walls defined between the main unit and the bottom units, thereby allowing personnel to move between the interior of the main unit and the interior of the bottom units via such door openings. This embodiment is advantageous with respect to temperature control inside the nacelle.

According to another preferred embodiment of the invention, at least one bottom unit is a shipping freight container. A shipping freight container is also referred to as an intermodal container, a standard freight container, a box container, a sea fright container, or an ISO container, and refers in general to a container used to store and move materials and products in the global containerized intermodal freight transport system for intercontinental traffic. The shipping freight container may follow the dimensional and structural specifications in the ISO standard of ISO 668:2013 for series 1 freight containers.

The shipping freight container comprises a floor, a roof, a pair opposed longer side walls, a pair of opposed shorter end walls, and a longitudinal axis. The longitudinal axis of the shipping freight container may be oriented substantially perpendicular or substantially parallel to the rotational axis of the drive train.

By using a shipping freight container as the housing of the units, the container can be easily transported from the manufacturing to the installation site, as the container itself does not need any extra packaging.

In addition, shipping freight containers are unexpensive compared to specifically designed unit housing due to the high production number and sizes of these containers. Standard tools and transport methods can be used for standard shipping freight containers.

Hence, . each bottom unit thereby inherits the advantages of shipping freight containers with respect to handling, transportation, and storage. Shipping freight containers can for example be handled anywhere in the world by ship, train, and truck etc. and at lower costs compared to bulk transport.

According to another preferred embodiment of the invention, the shipping freight container comprises an undulated surface and/or exterior cooling fins to increase the heat exchange between the container and the environment.

An advantage of using exterior cooling fins for the heat exchange of the units is that the system is easily scalable to any size of unit, as the number of fins or their length can be adjusted depending on the size of the unit. In addition, the cooling fins can easily be integrated in current shipping containers because there is enough empty space on the outer surface of the container for the installation of fins. In addition, there is no need for a power source, as the cooling fins only extend the surface of the unit, so they do not require any pumps or hydraulic systems for cooling. In comparison, systems comprising fans require further electricity input to power the fans. A further advantage of the use of cooling fins is that it is a passive system and does not require fans, so no noise is emitted by the passive system alone.

The advantage of using an undulated surface is the same as the fins, it increases the surface of the unit thereby increasing the heat exchange.

According to another preferred embodiment of the invention, at least one bottom unit has a cooling unit. The units can thus have independent cooling systems and the cooling can be adjusted to match the needs of the components housed within the units.

According to another preferred embodiment of the invention, the cooling unit is a fan and/or a blower for ventilating the internal space of the bottom unit.

According to another preferred embodiment of the invention, the bottom units are connected by means of a busbar connection. This configuration allows for shorter distances between the electrical modules, leading to less expensive bus bar connections.

According to another preferred embodiment of the invention, the bottom units comprise openable or removable portions to permit air flow the bottom units. In particular, the side walls, end walls, and/or bottom of the bottom units may include openable or removable portions to permit air flow through the bottom unit. This increases the cooling of the bottom unit.

The bottom units can further include sliding and/or pivoting heat exchangers configured to slide and/or pivot through or out of openable or removable sections of the end walls of the bottom units, the sliding and/or pivoting heat exchangers positionable within the envelope of the bottom units for shipping, and deployable to an operable position once the bottom units are mounted to the main unit, thereby providing a scalable capability to the module.

According to another preferred embodiment of the invention, at least one of the bottom units further comprises a battery or a fuel cell. Such components can be suitably housed in the bottom unit, and advantageously carried directly to the main unit if needed.

According to another preferred embodiment of the invention, at least one of the bottom units further comprises an electrolytic unit. Electrolytic units are power-to-gas units configured to produce hydrogen. Hence, the energy produced by the wind turbine may be used in an electrolysis process to generate hydrogen and oxygen. These gases can be used afterwards for the generation of electrical energy in fuel cells or to produce chemicals, such as ammonia or methane. The produced gases from the electrolytic unit can be transported by using a pipeline or by pressurizing the gas into a container, which is less expensive than transporting electricity directly over long-distance power lines. The transport of hydrogen, in particular in a pipeline system, is less expensive than transporting electricity directly to shore.

Due to the fluctuation of the power generation, depending for example on weather conditions and wind levels, it is difficult to foresee the power output of a wind turbine to the electricity grid or to an energy storage device. By using a part of the energy produced by the generator to produce hydrogen, the fluctuations can be mitigated. The hydrogen can be taken out of the wind turbine by a system outlet, or a hydrogen output coupled to an output of the electrolytic unit.

The electrolytic unit can also be a mixed gas generator which performs electrolysis and generates other gases. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the hydrogen and gives it a flame speed up to eight times higher than compressed natural gas.

The bottom unit can further include one or more of water/air heat exchangers, pumps for circulation of water, fans and/or blowers for circulating air, a filtration system for removing particles, salt, and/or humidity from the air, hoses and/or ducts for guiding flow of liquid and air, a fire suppression system for extinguishing fires in the unit, mufflers and/or silencers for reducing noise emissions into the environment, and related power supplies, surveillance, and control equipment.

Yet another aspect of the invention relates to a wind turbine comprising a tower, a nacelle mounted on the tower by means of the yawing arrangement and a rotor for harvesting wind energy by rotation of the rotor about a rotor axis substantially parallel to the rotational axis of the drive train.

The rotor has a set of wind turbine blades mounted thereon. The blades catch the wind, thereby causing the rotor to rotate, and the rotational movements of the rotor are transformed into electrical energy in a generator, e.g. via a gear arrangement.

Yet another aspect of the invention relates to a method of assembling a wind turbine. The wind turbine comprises a tower and a nacelle. The method comprises the steps of
- preassembling the first converter in the first bottom unit, the second converter in the second bottom unit and the transformer in the third bottom unit,
- attaching each of the first bottom unit, second bottom unit and third bottom unit to the bottom surface of the main unit through attaching means,
- hoisting the assembled main unit and bottom units on top of the tower,
- installing the assembled main unit and bottom units on top of the tower by coupling the yawing arrangement to the top of the tower,
- installing the drive train in the main unit, and
- closing the main unit by installing a canopy roof on the main unit.

The preassembly can be done directly in the container at the supplier factory, thereby reducing the costs.

In addition, by using a shipping freight container as the housing of the units, the container can be easily transported from the manufacturing to the installation site, as the container itself does not need any extra packaging.

A cooling unit and in particular a heat exchanger can be placed on the canopy roof once it is installed on the main unit.

In order to facilitate the understanding of the characteristics of the invention and being an integral part of this specification, some drawing sheets are attached on which figures, with an illustrative but not limiting character, the following is represented:
Figure 1 shows a nacelle comprising three bottom units according to an embodiment of the invention.
Figure 2 shows the bottom units of the nacelle of Figure 1.
Figures 3 to 6 show a method of assembling a nacelle according to the embodiment shown in Figure 1.
Figure 7 shows a nacelle according to a further embodiment of the invention.
Figures 8 to 10 show a nacelle according to a further embodiment of the invention.
Figure 11 shows the bottom units of the nacelle of Figures 8 to 10.
Figures 12 to 16 show a method of assembling a nacelle according to the embodiment shown in Figures 8 to 10.
Figures 17 and 18 show the busbar connections between bottom units.

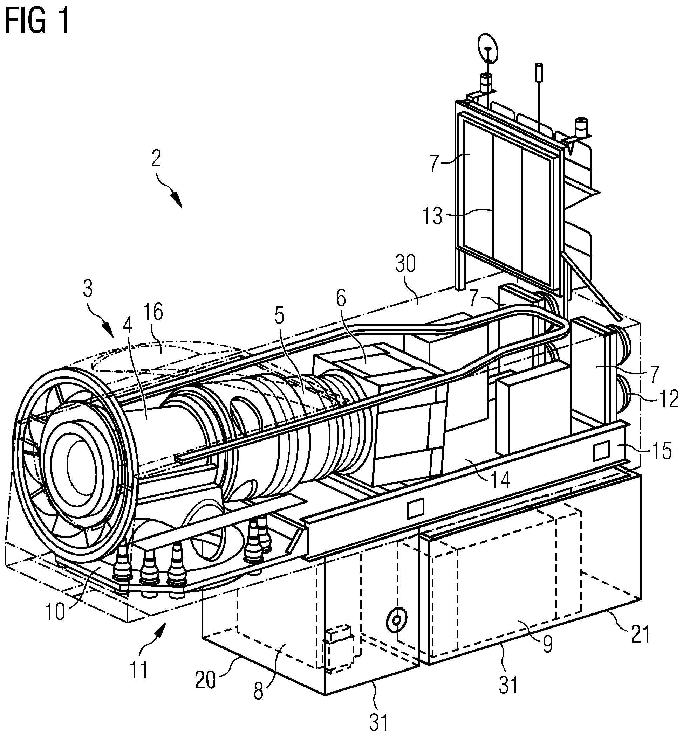

Figure 1 shows a nacelle 2 comprising three bottom units 31 according to an embodiment of the invention. The nacelle (2) comprises a main unit (30) and three bottom units (3).

The main unit (30) is configured to be connected to a tower (17) by means of a yawing arrangement (11) supported by a bed frame (10) and houses the drive train (3), which comprises a main bearing (4), a gearbox (5) and a generator (6).

The first, second and third bottom units (31) are mounted below a bottom surface of the main unit (30). The main unit (30) and the first, second and third bottom units (31) are separate units fixed together by attaching means (22).

The first and second bottom units (31) house the first and second converters (9), respectively. The third bottom unit (31) houses the transformer (8).

The main unit (30) and the first and second bottom unit (31) extend in a direction substantially parallel to a rotational axis of the drive train (3).

The first and second bottom units (31) are arranged side by side in a direction substantially parallel to the rotational axis of the drive train (3) and the third bottom unit (31) extends in a direction substantially perpendicular to the rotational axis of the drive train (3) and is arranged between the first and second bottom units (31) and the yawing arrangement (11).

The main unit (30) further comprises a cooling unit (7) in the form of a heat exchanger (13) mounted on the canopy roof (16) for cooling the interior of the main unit (30).

In addition, the main unit (30) further comprises a further cooling unit (7) in the form of fans (12) arranged at the rear wall of the main unit (30) for cooling the interior of the main unit (30).

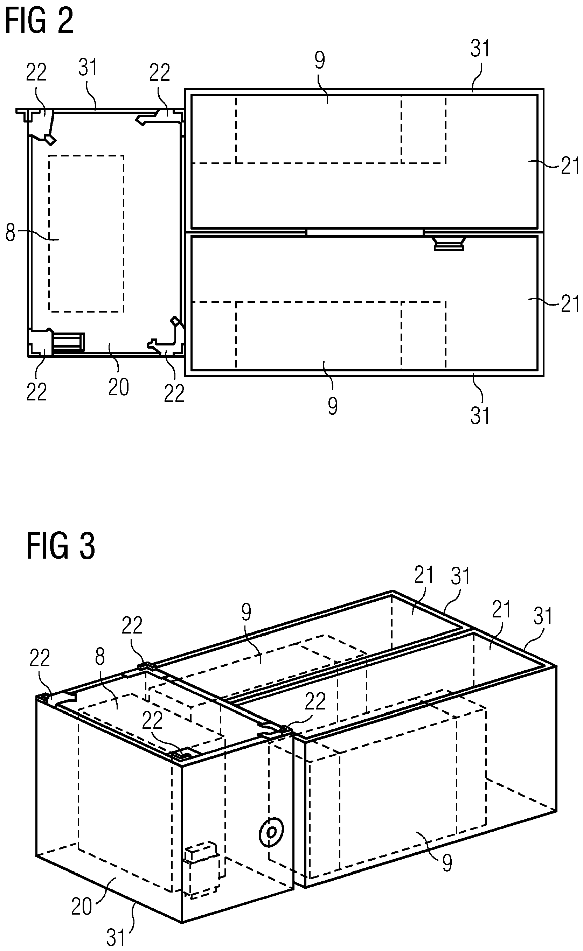

Figure 2 shows the bottom units 31 of the nacelle 2 of Figure 1. This configuration is advantageous, as the busbar connection 24 between the first and second converters 9 and the transformer 8 are shorter than in the wind turbines known in the prior art. In addition, by arranging the components close to the tower 17, the center of gravity of the rear end of the nacelle 2 is shifted towards the tower 17, thereby increasing the stability of the structure.

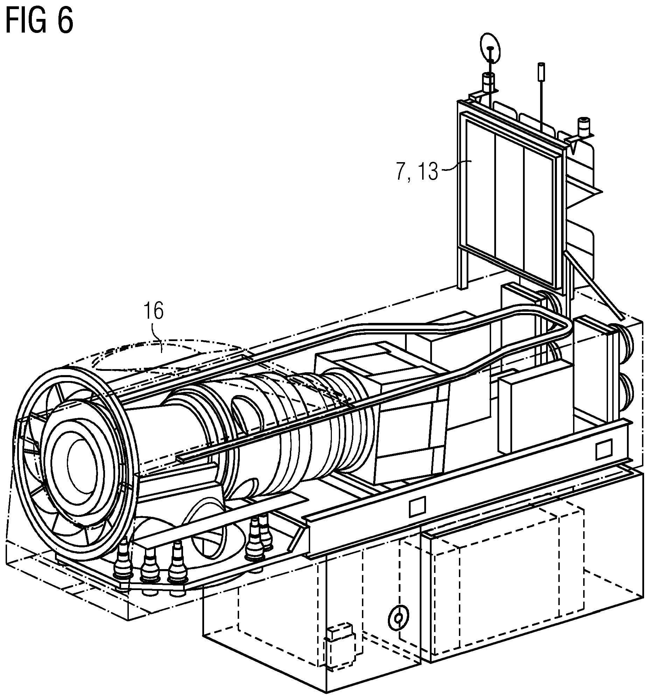

Figures 3 to 6 show a method of assembling a nacelle 2 according to the embodiment shown in Figure 1.

The method comprising the steps of preassembling the first converter (9) in the first bottom unit (31), the second converter (9) in the second bottom unit (31) and the transformer (8) in the third bottom unit (31), as shown in Figure 3.

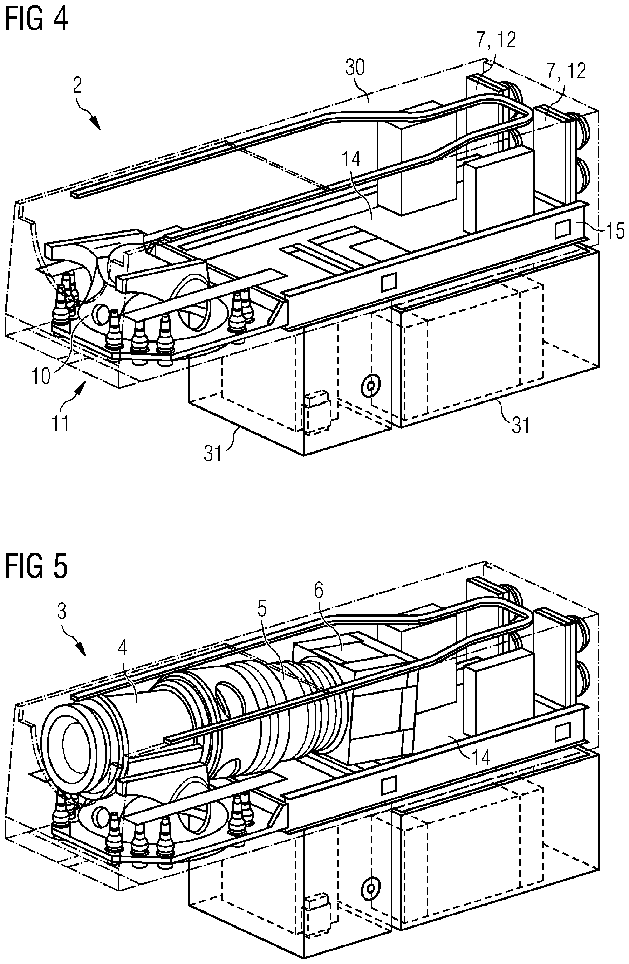

In a further step, the first bottom unit (31), second bottom unit (31) and third bottom unit (31) are attached to the bottom surface of the main unit (30) through attaching means (22), as shown in Figure 4.

In a further step not shown in the Figures, the assembled main unit (30) and bottom units (21) are hoisted and installed on top of the tower (17) by coupling the yawing arrangement (11) to the top of the tower (17),

In a further step, the drive train (3) is installed in the main unit (30), as shown in Figure 5.

In a further step, the main unit (30) is closed by installing a canopy roof (16) on the main unit (30). After the canopy roof (16) is installed, the heat exchanger (13) can be installed on the canopy roof (16).

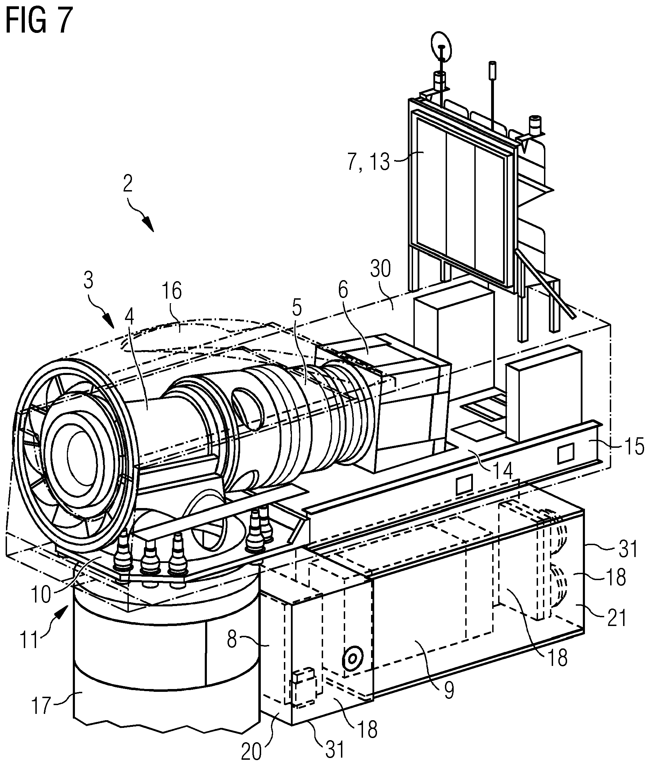

Figure 7 shows a nacelle 2 according to a further embodiment of the invention. It is a similar embodiment as the one shown in Figure 1 with the difference that the nacelle 2 is already installed on top of the tower 17 and that the bottom units 31 are shipping freight containers 18.

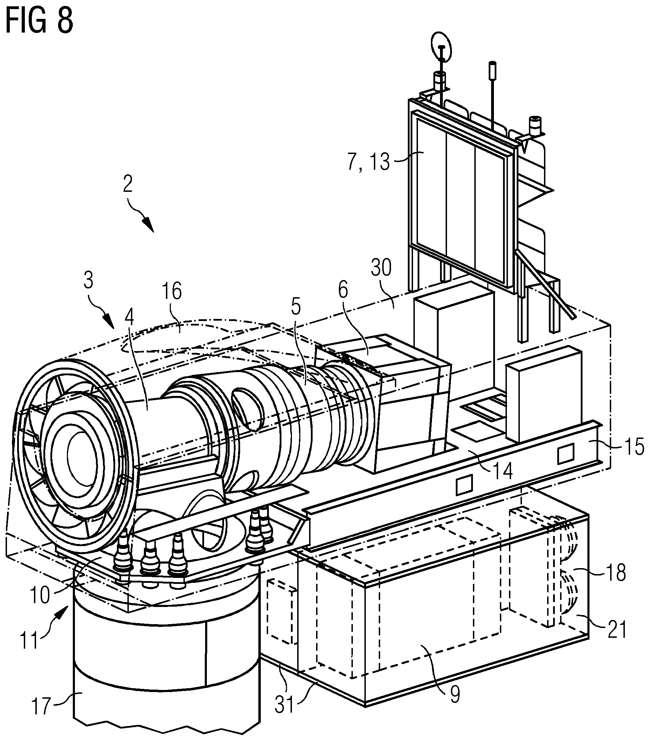

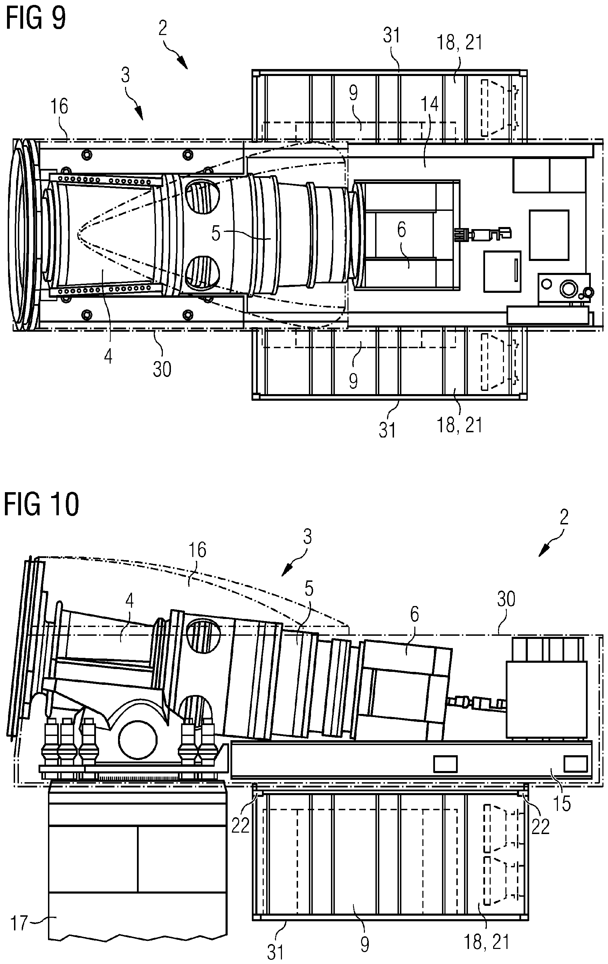

Figures 8 to 10 show a nacelle 2 according to a further embodiment of the invention. It is a similar embodiment as the one shown in Figure 7 with the difference that the third bottom unit (31) extends in a direction substantially parallel to the rotational axis of the drive train (3) and is arranged side by side between the first bottom unit (31) and the second bottom unit (31).

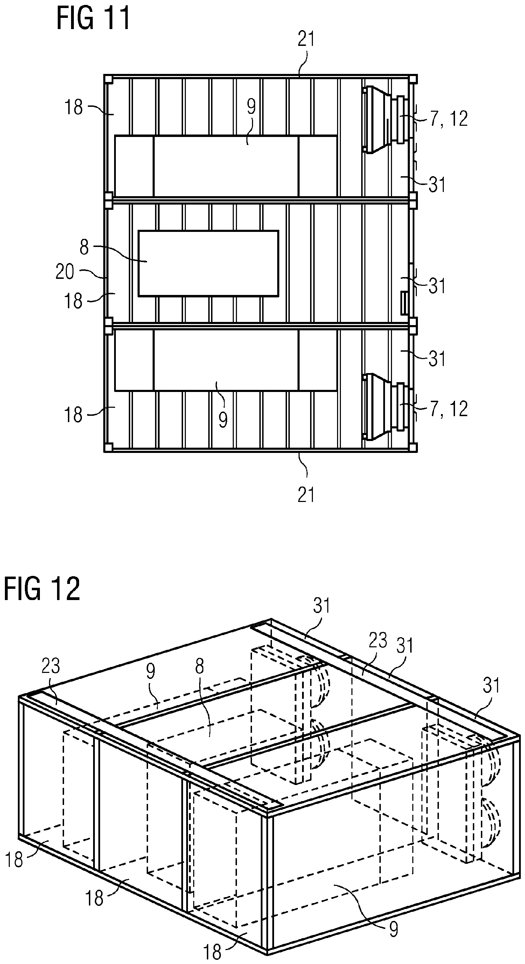

Figure 11 shows the bottom units 31 of the nacelle 2 of Figures 8 to 10. This configuration is advantageous, as the busbar connection 24 between the first and second converters 9 and the transformer 8 are shorter than in the wind turbines known in the prior art. In addition, by arranging the components close to the tower 17, the center of gravity of the rear end of the nacelle 2 is shifted towards the tower 17, thereby increasing the stability of the structure. The figure further shows fans 12 as cooling units 7 in the bottom units 31 comprising the first and second converter 9, which allow for an independent cooling of the converters 9.

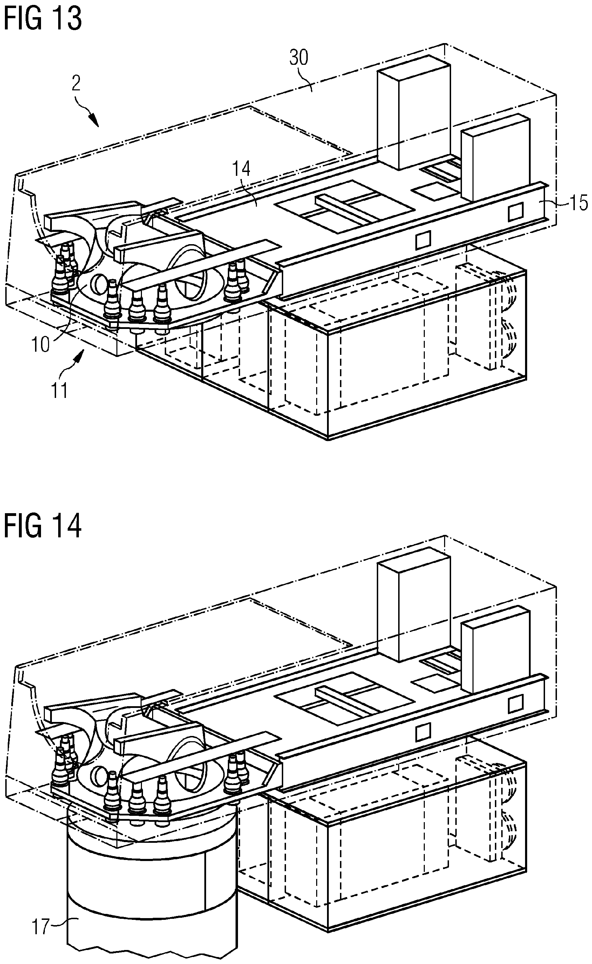

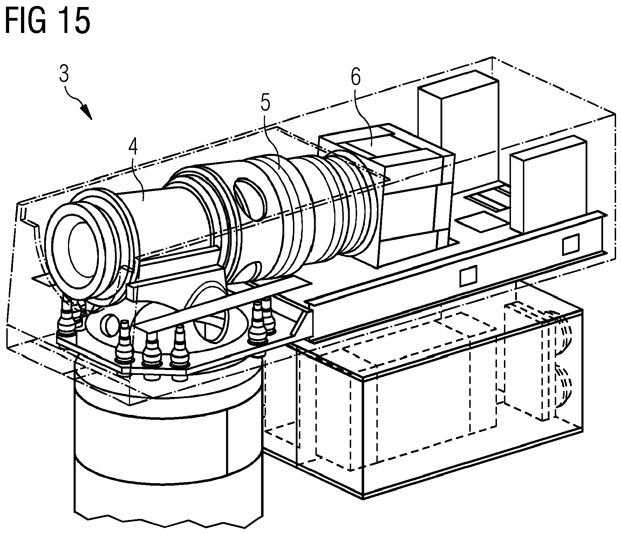

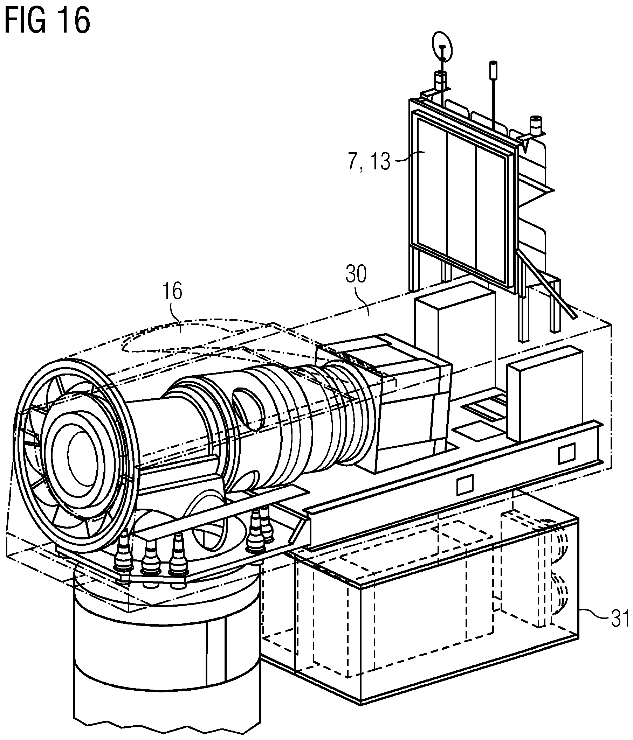

Figures 12 to 16 show a method of assembling a nacelle 2 according to the embodiment shown in Figures 8 to 10. The method of assembling the nacelle 2 follows the same steps as the one mentioned in Figures 3 to 6.

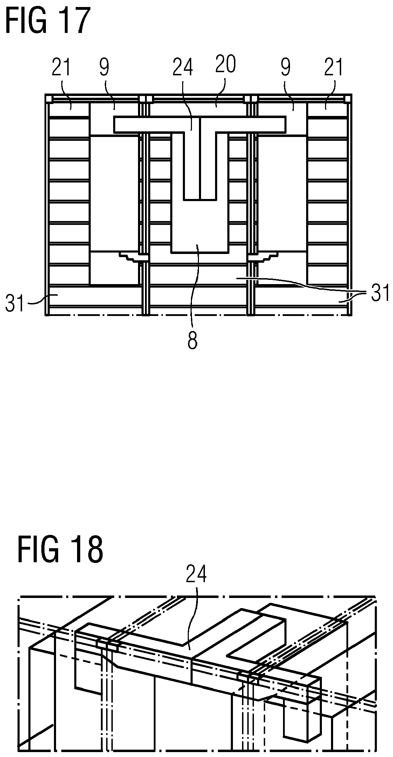

Figures 17 and 18 show the busbar connections 24 between bottom units 31. From these figures, it can be seen that the connections are much shorter than the ones known in the prior art.

### Reference Numbers

- 1: Wind turbine
- 2: Nacelle
- 3: Drive train
- 4: Main bearing
- 5: Gearbox
- 6: Generator
- 7: Cooling unit
- 8: Transformer
- 9: Converter
- 10: Bed frame
- 11: Yaw arrangement
- 12: Fan
- 13: Heat exchanger
- 14: Supporting structure
- 15: Supporting beams
- 16: Canopy roof
- 17: Tower
- 18: Shipping freight container

- 20: Transformer unit container
- 21: Converter unit container
- 22: Attaching means
- 23: Coupling means
- 24: Busbar connection

- 30: Main unit
- 31: Bottom unit

## Claims

1. A nacelle (2) for housing a drive train (3), a transformer (8) and a first converter (9) of a wind turbine (1), the nacelle (2) comprising
a main unit (30) configured to be connected to a tower (17) by means of a yawing arrangement (11) and housing the drive train (3) and
a first bottom unit (31) mounted below a bottom surface of the main unit (30) and housing the first converter (9), wherein the main unit (30) and the first bottom unit (31) are separate units fixed together by attaching means (22), wherein the main unit (30) and the first bottom unit (31) extend in a direction substantially parallel to a rotational axis of the drive train (3).

2. The nacelle (2) according to claim 1, wherein the nacelle (2) further comprises a second bottom unit (31) mounted below the bottom surface of the main unit (30) and extending in a direction substantially parallel to the rotational axis of the drive train (3), wherein the second bottom unit (31) houses a second converter (9).

3. The nacelle (2) according to claim 1 or 2, wherein the nacelle (2) further comprises a third bottom unit (31) mounted below the bottom surface of the main unit (30), wherein the third bottom unit (31) houses the transformer (8).

4. The nacelle (2) according to claim 3, wherein the third bottom unit (31) extends in a direction substantially parallel to the rotational axis of the drive train (3) and is arranged side by side between the first bottom unit (31) and the second bottom unit (31).

5. The nacelle (2) according to claim 3, wherein the first and second bottom units (31) are arranged side by side in a direction substantially parallel to the rotational axis of the drive train (3), wherein the third bottom unit (31) extends in a direction substantially perpendicular to the rotational axis of the drive train (3) and is arranged between the first and second bottom units (31) and the yawing arrangement (11).

6. The nacelle (2) according to any of the preceding claims, wherein the main unit (30) and at least one bottom unit (31) comprise openings for direct access between the units (30, 31) .

7. The nacelle (2) according to any of the preceding claims, wherein at least one bottom unit (31) is a shipping freight container.

8. The nacelle (2) according to claim 7, wherein the shipping freight container comprises an undulated surface and/or exterior cooling fins to increase the heat exchange between the container and the environment.

9. The nacelle (2) according to any of the preceding claims, wherein at least one bottom unit (31) has a cooling unit (7).

10. The nacelle (2) according to claim 9, wherein the cooling unit (7) is a fan.

11. The nacelle (2) according to any of the preceding claims, wherein the bottom units (31) comprise openable or removable portions to permit air flow the bottom units (31).

12. The nacelle (2) according to any of the preceding claims, wherein the bottom units (31) are connected by means of a busbar connection (24).

13. The nacelle (2) according to any of the preceding claims, wherein at least one of the bottom units (31) further comprises a battery and/or a fuel cell.

14. A wind turbine (1) comprising a tower (17), a nacelle (2) according to any of the claims 1 to 13 mounted on the tower (17) by means of the yawing arrangement (11) and a rotor for harvesting wind energy by rotation of the rotor about a rotor axis substantially parallel to the rotational axis of the drive train (3).

15. Method of assembling a wind turbine (1) comprising a tower (17) and a nacelle according to any of the claims 3 to 13, the method comprising the steps of
- preassembling the first converter (9) in the first bottom unit (31), the second converter (9) in the second bottom unit (31) and the transformer (8) in the third bottom unit (31),
- attaching each of the first bottom unit (31), second bottom unit (31) and third bottom unit (31) to the bottom surface of the main unit (30) through attaching means (22),
- hoisting the assembled main unit (30) and bottom units (21) on top of the tower (17),
- installing the assembled main unit (30) and bottom units (21) on top of the tower (17) by coupling the yawing arrangement (11) to the top of the tower (17),
- installing the drive train (3) in the main unit (30), and
- closing the main unit (30) by installing a canopy roof (16) on the main unit (30).
